# EUROPÄISCHE PATENTSCHRIFT

(11) **EP 2 237 073 B1**
(45) Veröffentlichungstag und Bekanntmachung des Hinweises auf die Patenterteilung: **31.10.2012**
(21) Anmeldenummer: 09004569.1
(22) Anmeldetag: 30.03.2009
(51) Int. Cl.: G01T 1/20, G01T 1/40

(54) **Verfahren und Vorrichtung zur Überwachung einer automatischen Driftkompensation**
Method and device for monitoring an automated drift compensation
Procédé et dispositif destinés à la surveillance d'une compensation de dérive automatique

(43) Veröffentlichungstag der Anmeldung: 06.10.2010
(73) Patentinhaber: Berthold Technologies GmbH & Co. KG, 75323 Bad Wildbad (DE)
(72) Erfinder: Freiburger, Ewald, 75245 Neulingen (DE); Briggmann, Jürgen, 70195 Stuttgart (DE); Kappler, Gerhard, 75378 Bad Liebenzell (DE)
(74) Vertreter: Patentanwälte Ruff, Wilhelm, Beier, Dauster & Partner

(56) Entgegenhaltungen:
- DE-A1- 1 809 520
- DE-C1- 4 114 030
- US-A- 3 428 804
- US-A- 3 767 921
- US-A- 3 800 143
- US-A- 6 064 068

## Beschreibung

Die Erfindung betrifft ein Verfahren und eine Vorrichtung zur Überwachung einer automatischen Driftkompensation eines Szintillationszählers.

In der Prozessmesstechnik werden zur Messung von Prozessgrößen oder Materialeigenschaften, beispielsweise zur Füllstandsmessung, zur Feuchtigkeitsmessung, zur Dichtemessung etc., häufig radiometrische Messsysteme verwendet, die Szintillationszähler bzw. Szintillationsdetektoren zur Strahlungsmessung umfassen.

Szintillationszähler dienen beispielsweise zur Bestimmung des Spektrums von ionisierender Strahlung, d.h. der Bestimmung der Intensität als Funktion der Energie der ionisierenden Strahlung, wobei ein Szintillationszähler einen Szintillator umfasst, der beim Durchgang von Strahlung in Form von energiereichen geladenen Teilchen oder Photonen angeregt wird und die Anregungsenergie in Form von Lichtimpulsen (meist im UV- oder sichtbaren Bereich) wieder abgibt, was als Szintillation bezeichnet wird.

Die derart erzeugten Lichtimpulse werden mit einem geeigneten optischen Sensor in elektrische Signale umgewandelt und verstärkt. Ein solcher Sensor ist typischerweise ein Photomultiplier oder eine Photodiode. Der optische Sensor gibt Impulse aus, wobei eine Anzahl von Impulsen pro Zeiteinheit, d.h. die Zählrate, ein Maß für die Intensität der Strahlung ist und eine Impulshöhe bzw. Impulsamplitude (genauer ein Integral über dem zeitlichen Verlauf des Impulses) ein Maß für die Energie der Strahlung ist.

Zur Messung einer Prozessgröße in Form eines Füllstands in einem Behälter kann beispielsweise der Behälter an einer Seite mit der Strahlung einer Nutzstrahlungsquelle beaufschlagt werden und eine Intensität der Strahlung auf der gegenüberliegenden Seite der Nutzstrahlungsquelle mittels eines Szintillationszählers gemessen werden. Die gemessene Intensität bzw. Zählrate hängt vom Füllstand des Behälters ab, da beim Vorhandensein von Messgut im Strahlenpfad ein Teil der Strahlung durch das Messgut absorbiert wird, d.h. der Füllstand kann in Abhängigkeit von der gemessenen Zählrate bestimmt werden.

Die gemessene Zählrate unterliegt jedoch Drifteffekten, die beispielsweise durch Temperaturschwankungen, Alterungseffekte des Szintillators und/oder des Photomultipliers und/oder Drifteffekte in einer Auswerteelektronik verursacht werden können. Diese Drifteffekte führen zu Messfehlern, die eine zuverlässige Ermittlung der Prozessgröße unmöglich machen können.

Ein Verfahren zur automatischen Driftkompensation eines Szintillationszählers ist beispielsweise in der Patentschrift US 3,800,143 beschrieben. Zur Driftkompensation wird eine erste Zählrate von Impulsen bestimmt, deren Energieniveau bzw. Impulshöhe über einer ersten vorgebbaren Schwelle liegt, und eine zweite Zählrate von Impulsen bestimmt, deren Energieniveau bzw. Impulshöhe über einer zweiten vorgebbaren Schwelle liegt. Die Impulshöhe hängt, neben der Energie des beobachteten Teilchens bzw. Photons, auch von einer Gesamtverstärkung bzw. einem Gesamtverstärkungsfaktor des Szintillationszählers ab, die bzw. der bei einer gegebenen Energie des auf den Szintillator auftreffenden Teilchens bzw. Photons die Impulshöhe bestimmt. Die Verstärkung wird unter anderem durch einen Pegel einer Hochspannung, mit der der Photomultiplier beaufschlagt wird, und durch die Verstärkung einer Auswerteelektronik bestimmt, die aus dem vom Photomultiplier ausgegebenen Signal durch analoge Aufbereitung ein Signal in einem Pegelbereich erzeugt, der beispielsweise zur digitalen Auswertung mittels eines Komparators und eines nachgeschalteten Mikroprozessors geeignet ist. Die Veränderung der Gesamtverstärkung, beispielsweise durch Änderung der den Photomultiplier versorgenden Hochspannung, bewirkt eine Veränderung des durch den Szintillationszähler gemessenen Spektrums in Energie-Richtung, wodurch sich ein Zählratenverhältnis zwischen der ersten Zählrate und der zweiten Zählrate verändert. Es hat sich gezeigt, dass das Zählratenverhältnis bei geeigneter Wahl der Schwellen im Wesentlichen nur von der verwendeten Nutzstrahlungsquelle bestimmt wird und beispielsweise bei einer Füllstandsmessung nicht wesentlich vom Füllstand abhängt. Folglich kann eine Driftkompensation dadurch erzielt werden, dass die Gesamtverstärkung derart nachgeführt wird, dass das Zählratenverhältnis einer vorgegebenen Funktion entspricht, insbesondere konstant bleibt.

Diese Art der Driftkompensation setzt voraus, dass die Verstärkung im Zuge eines Kompensationsvorgangs derart einstellbar ist, dass sich das gewünschte Zählratenverhältnis ergibt. Da jedoch zur Driftkompensation die Nutzstrahlungsquelle verwendet wird, die auch zur Messung der Prozessgröße dient, hängt die tatsächliche Strahlungsintensität am Szintillator davon ab, ob Medien, und gegebenenfalls welche Medien, sich in einem Strahlungspfad befinden. Die Driftkompensation ist daher nicht exakt vorhersagbaren Randbedingungen unterworfen. Falls beispielsweise am Beginn einer Driftkompensation aufgrund von stark absorbierenden Medien im Strahlungspfad eine zu geringe Zählrate ermittelt wird, wird die Gesamtverstärkung, beispielsweise durch Erhöhen der Hochspannung des Photomultipliers, vergrößert. Falls sich das gewünschte Verhältnis nicht einstellt, wird die Gesamtverstärkung weiter erhöht, wodurch möglicherweise auch Rauschimpulse zu der gemessenen Zählrate beitragen. Dies wiederum kann zu einer Verfälschung einer gemessenen Prozessgröße führen, die bei Systemen mit einer zum Beispiel durch Normen vorgeschriebenen funktionalen Sicherheit nicht zulässig ist.

Die US 6,064,068 zeigt ein System zum Überwachen der Stabilität eines Szintillationsdetektors, bei dem mittels einer Überwachungsstrahlungsquelle die Stabilität des Szintillationsdetektors überwacht wird.

Die DE 18 09 520 A1 zeigt eine Einrichtung zur automatischen Driftkompensation, bei der zur Driftkompensation eine von einem Integraldiskriminator registrierte Impulsrate konstant gehalten wird.

Die US 3,428,804 zeigt ein Verfahren zur Driftkompensation, bei dem mittels einer Referenzstrahlungsquelle eine Driftkompensation erfolgt.

Die DE 41 14 030 C1 zeigt ein Verfahren zur automatischen Driftkompensation, bei dem zur Driftkompensation eine Rate von Impulsen mit einer bestimmten Impulshöhe konstant gehalten wird.

Die US 3,800,143 und die US 3,767,921 zeigen jeweils Verfahren zur automatischen Driftkompensation, bei denen zur Driftkompensation ein Verhältnis von Zählraten von Impulsen, die unterschiedliche Energieniveaus aufweisen, zur Driftkompensation verwendet wird.

Der Erfindung liegt daher die Aufgabe zugrunde, ein Verfahren und eine Vorrichtung zur Überwachung einer automatischen Driftkompensation eines Szintillationszählers zur Verfügung zu stellen, die eine Driftkompensation hinsichtlich ihrer ordnungsgemäßen Funktion zuverlässig überwachen.

Die Erfindung löst diese Aufgabe durch ein Verfahren mit den Merkmalen des Anspruchs 1 und eine Vorrichtung mit den Merkmalen des Anspruchs 7.

Bevorzugte Ausführungsformen sind Gegenstand der Unteransprüche, deren Wortlaut durch Bezugnahme zum Inhalt der Beschreibung gemacht wird, um unnötige Wiederholungen zu vermeiden.

Bei dem erfindungsgemäßen Verfahren zur Überwachung einer automatischen Driftkompensation eines Szintillationszählers mit einem Szintillator wird der Szintillator zur automatischen Driftkompensation mit der Strahlung einer Nutzstrahlungsquelle mit einem Nutzstrahlungsquellenenergiespektrum beaufschlagt. Zusätzlich wird der Szintillator mit der Strahlung einer Überwachungsstrahlungsquelle, die von der Nutzstrahlungsquelle unabhängig ist, mit einem Überwachungsstrahlungsquellenenergiespektrum beaufschlagt, das sich von dem Nutzstrahlungsquellenenergiespektrum unterscheidet. Die von der Überwachungsstrahlungsquelle emittierte Strahlung weist bevorzugt eine konstante Intensität auf, die eine vorhersagbare bzw. bekannte Zählrate bewirkt. Zur Überwachung der automatischen Driftkompensation wird eine durch die Überwachungsstrahlungsquelle bewirkte Zählrate ausgewertet. Die Zählrate kann vor der Auswertung über einen Zeitbereich von einigen Minuten bis einigen Stunden gemittelt werden. Wenn im Zuge eines Driftkompensationsvorgangs die Verstärkung unzulässig verändert wird, ändert sich auch die durch die Überwachungsstrahlungsquelle bewirkte Zählrate. Da diese Zählrate vorhersagbar bzw. bekannt ist, kann sie dazu verwendet werden, die ordnungsgemäße Funktion der Driftkompensation zu überwachen.

Die automatische Driftkompensation umfasst die Schritte: Erzeugen von verstärkten elektrischen Impulsen mit einem Betrag, der von der Energie eines beobachteten Teilchens bzw. Photons der Strahlungsquelle und von der Verstärkung abhängt, Bestimmen einer ersten Zählrate von Impulsen mit einem Betrag, der über einer ersten Schwelle liegt, Bestimmen einer zweiten Zählrate von Impulsen mit einem Betrag, der über einer zweiten Schwelle liegt, wobei die zweite Schwelle über der ersten Schwelle liegt, und Regeln der Verstärkung derart, dass ein Verhältnis zwischen der ersten Zählrate und der zweiten Zählrate einer vorgegebenen Funktion entspricht, insbesondere konstant bleibt. Das Verhältnis kann beispielsweise eine Funktion einer Gesamtzählrate sein. Die Gesamtzählrate ist hierbei diejenige Zählrate, die von Impulsen bewirkt wird, die eine unterste Detektionsschwelle gerade überschreiten.

In einer Weiterbildung weist das Überwachungsstrahlungsquellenenergiespektrum spektrale Anteile auf, die ein höheres Energieniveau aufweisen, als die spektralen Anteile des Nutzstrahlungsquellenenergiespektrums.

In einer Weiterbildung ist die Strahlung der Überwachungsstrahlungsquelle kosmische Höhenstrahlung. Alternativ ist die Überwachungsstrahlungsquelle eine Kalium-40-Strahlungsquelle.

In einer Weiterbildung wird eine Fehlfunktion der automatischen Driftkompensation bestimmt, wenn die durch die Überwachungsstrahlungsquelle bewirkte Zählrate eine obere Zählratenschwelle überschreitet oder eine untere Zählratenschwelle unterschreitet.

In einer Weiterbildung wird eine durch die Nutzstrahlungsquelle bewirkte Zählrate außer zur Driftkompensation auch zur Messung einer Prozessgröße ausgewertet. Bei der Messung der Prozessgröße kann es sich beispielsweise um eine Füllstandsmessung, eine Feuchtigkeitsmessung, eine Dichtemessung etc. handeln.

Die erfindungsgemäße Vorrichtung zur Überwachung einer automatischen Driftkompensation eines Szintillationszählers ist zur Durchführung des vorgenannten Verfahrens ausgebildet. Die Vorrichtung umfasst eine Driftkompensationsüberwachungseinheit, die dazu ausgebildet ist, eine durch eine Überwachungsstrahlungsquelle bewirkte Zählrate zur Überwachung der automatischen Driftkompensation auszuwerten.

Die Vorrichtung umfasst einen Szintillator, einen optischen Sensor, der mit dem Szintillator optisch gekoppelt ist, wobei der optische Sensor elektrische Impulse mit einem Betrag erzeugt, der unter anderem von der Energie eines beobachteten Teilchens einer Strahlungsquelle abhängt, eine Verstärkungseinheit, die mit dem optischen Sensor elektrisch gekoppelt ist und die dazu ausgebildet ist, die elektrischen Impulse des optischen Sensors mit einem variablen Verstärkungsfaktor zu verstärken, einen ersten mit dem optischen Sensor gekoppelten Komparator, der an seinem Ausgang einen Impuls erzeugt, wenn der Betrag des durch den optischen Sensor erzeugten und verstärkten Impulses über einer ersten Schwelle liegt, einen zweiten mit dem optischen Sensor gekoppelten Komparator, der an seinem Ausgang einen Impuls erzeugt, wenn der Betrag des durch den optischen Sensor erzeugten und verstärkten Impulses über einer zweiten Schwelle liegt, wobei die zweite Schwelle über der ersten Schwelle liegt, eine Driftkompensationseinheit, die mit der Verstärkungseinheit und mit dem jeweiligen Ausgang des ersten und des zweiten Komparators verbunden ist und die dazu ausgebildet ist, den Verstärkungsfaktor derart nachzuführen, dass ein Verhältnis zwischen einer Zählrate der Impulse am Ausgang des ersten Komparators und einer Zählrate der Impulse am Ausgang des zweiten Komparators einer vorgegebenen Funktion entspricht, insbesondere konstant bleibt, wobei die Driftkompensationsüberwachungseinheit umfasst: einen dritten mit dem optischen Sensor gekoppelten Komparator, der an seinem Ausgang einen Impuls erzeugt, wenn der Betrag des durch den optischen Sensor erzeugten und verstärkten Impulses über einer dritten Schwelle liegt, wobei die dritte Schwelle sich von der ersten Schwelle und der zweiten Schwelle unterscheidet, und eine Zählratenüberwachungseinheit, die eine Zählrate der Impulse am Ausgang des dritten Komparators zur Überwachung der automatischen Driftkompensation auswertet.

In einer Weiterbildung liegt die dritte Schwelle energetisch über der ersten Schwelle und der zweiten Schwelle.

In einer Weiterbildung ist der Szintillator ein Nal(TI)-Kristall, d.h. ein Natriumiodid-Kristall, der mit Thallium dotiert ist. Alternativ können auch andere Szintillatormaterialien verwendet werden.

In einer Weiterbildung umfasst die Vorrichtung eine Nutzstrahlungsquelle. Bevorzugt ist die Nutzstrahlungsquelle eine Cs-137- Strahlungsquelle. Es können abhängig von der jeweiligen Messaufgabe andere Nutzstrahlungsquellen verwendet werden, beispielsweise Co-60-Nutz-strahlungsquellen, Am-241-Nutzstrahlungsquellen, Cm-244-Nutzstrahl-ungsquellen etc.

In einer Weiterbildung umfasst die Vorrichtung eine Überwachungsstrahlungsquelle. Bevorzugt ist die Überwachungsstrahlungsquelle eine Kalium-40-Strahlungsquelle.

In einer Weiterbildung umfasst der optische Sensor einen Photomultiplier und die Verstärkungseinheit umfasst eine einstellbare Hochspannungsquelle zur Erzeugung einer einstellbaren Hochspannung für den Photomultiplier, wobei der Photomultiplier elektrische Impulse mit einem Betrag erzeugt, der von der Hochspannung und von der Energie eines beobachteten Teilchens abhängt, und wobei die Driftkompensationseinheit mit der Hochspannungsquelle verbunden ist und dazu ausgebildet ist, die Hochspannung derart nachzuführen, dass das Verhältnis zwischen der Zählrate der Impulse am Ausgang des ersten Komparators und der Zählrate der Impulse am Ausgang des zweiten Komparators einer vorgegebenen Funktion entspricht, insbesondere konstant bleibt.

In einer Weiterbildung umfasst der optische Sensor eine Photodiode und die Verstärkungseinheit umfasst einen Verstärker mit einstellbarer Verstärkung, wobei die Driftkompensationseinheit mit dem Verstärker verbunden ist und dazu ausgebildet ist, die einstellbare Verstärkung derart nachzuführen, dass das Verhältnis zwischen der Zählrate der Impulse am Ausgang des ersten Komparators und der Zählrate der Impulse am Ausgang des zweiten Komparators einer vorgegebenen Funktion entspricht, insbesondere konstant bleibt.

Ausführungsformen der Erfindung sind in den Zeichnungen schematisch dargestellt und werden im Folgenden näher erläutert. Hierbei zeigt:
- Fig. 1: eine erste Ausführungsform einer erfindungsgemäßen Vorrichtung zur Überwachung einer automatischen Driftkompensation eines Szintillationszählers,
- Fig. 2: ein Energiespektrum einer Nutzstrahlungsquelle und ein Energiespektrum einer Überwachungsstrahlungsquelle mit zugehörigen Schwellenwerten und
- Fig. 3: eine zweite Ausführungsform einer erfindungsgemäßen Vorrichtung zur Überwachung einer automatischen Driftkompensation eines Szintillationszählers.

Wenn ein Element als mit einem anderen Element gekoppelt oder verbunden bezeichnet wird, kann das Element mit dem anderen Element unmittelbar gekoppelt bzw. verbunden sein oder es können zwischengeschaltete Elemente vorhanden sein. Wenn jedoch ein Element als mit einem anderen Element direkt gekoppelt oder direkt verbunden bezeichnet wird, sind keine zwischengeschalteten Elemente vorhanden.

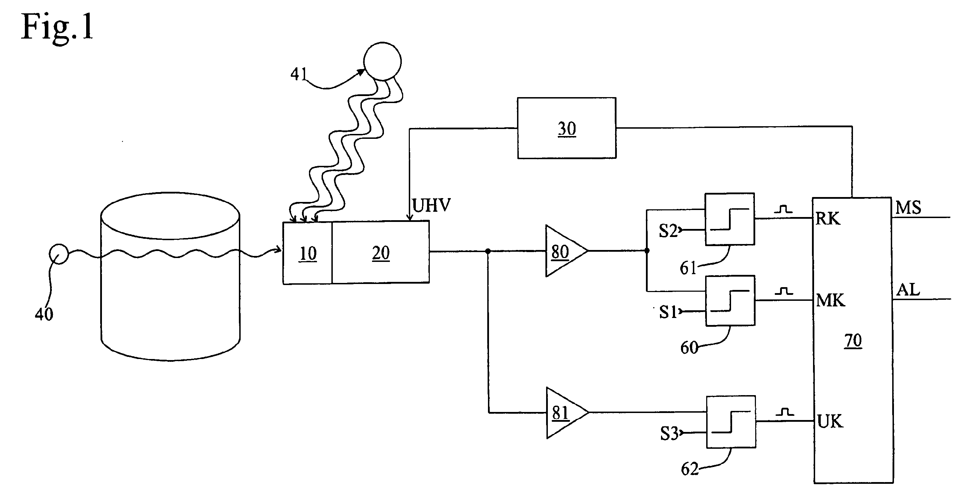

Fig. 1 zeigt eine erfindungsgemäße Vorrichtung zur Überwachung einer automatischen Driftkompensation eines Szintillationszählers. Die gezeigte Vorrichtung umfasst einem Szintillator in Form eines Nal(TI)-Kristalls 10, der mit einem optischen Sensor in Form eines Photomultipliers 20 optisch gekoppelt ist. Eine Verstärkungseinheit in Form einer einstellbaren Hochspannungsquelle 30 dient zur Erzeugung einer einstellbaren Hochspannung UHV für den Photomultiplier 20, wobei der Photomultiplier 20 elektrische Impulse mit einem Betrag bzw. einer Amplitude erzeugt, der bzw. die von der Hochspannung UHV und der Energie eines beobachteten Teilchens bzw. Photons einer Nutzstrahlungsquelle 40 bzw. der Energie eines beobachteten Teilchens bzw. Photons einer Überwachungsstrahlungsquelle 41 abhängt. Die Nutzstrahlungsquelle 40 ist in der gezeigten Ausführungsform eine Cs-137-Strahlungsquelle. Die Überwachungsstrahlungsquelle 41 wird in der gezeigten Ausführungsform durch hochenergetische Teilchenstrahlung aus dem Weltall, d.h. kosmische Höhenstrahlung, gebildet, kann jedoch alternativ oder zusätzlich eine Kalium-40-Strahlungsquelle sein.

Ein erster Komparator 60, ein zweiter Komparator 61 und ein dritter Komparator 62 sind über einen Verstärker 80 bzw. einen zweiten Verstärker 81 mit einem Ausgang des Photomultipliers 20 gekoppelt. Es wird ein geeignetes Verstärkungsverhältnis zwischen dem Verstärker 80 und dem Verstärker 81 gewählt.

Der erste Komparator 60 erzeugt an seinem Ausgang einen Impuls, wenn der Betrag des durch den Photomultiplier 20 erzeugten Impulses bzw. eine Impulshöhe oder Impulsamplitude über einer ersten Schwelle S1 liegt. Der zweite Komparator 61 erzeugt an seinem Ausgang einen Impuls, wenn der Betrag des durch den Photomultiplier 20 erzeugten Impulses über einer zweiten Schwelle S2 liegt, wobei die zweite Schwelle S2 über der ersten Schwelle S1 liegt. Der dritte Komparator 62 erzeugt an seinem Ausgang einen Impuls, wenn der Betrag des durch den Photomultiplier 20 erzeugten Impulses energetisch über einer dritten Schwelle S3 liegt, wobei die dritte Schwelle S3 sich von der ersten Schwelle S1 und der zweiten Schwelle S2 unterscheidet, vorliegend größer als die erste und die zweite Schwelle S1 und S2 ist.

Ein Mikroprozessor 70 ist mit einem Regelkanaleingang RK mit dem Ausgang des zweiten Komparators 61 verbunden, mit einem Messkanaleingang MK mit dem Ausgang des ersten Komparators 60 verbunden und mit einem Überwachungskanaleingang UK mit dem Ausgang des dritten Komparators 62 verbunden. Der Mikroprozessor 70 bildet unter anderem eine Driftkompensationseinheit und ist derart programmiert, dass er mittels geeigneter Ansteuerung der Hochspannungsquelle 30 die Hochspannung UHV derart nachführt, dass ein Verhältnis zwischen einer Zählrate der Impulse am Ausgang des ersten Komparators 60 und einer Zählrate der Impulse am Ausgang des zweiten Komparators 61 einer vorgegebenen Funktion entspricht, insbesondere konstant bleibt. Alternativ kann der Mikroprozessor 70 derart programmiert sein, dass er mittels geeigneter Ansteuerung der Hochspannungsquelle 30 die Hochspannung UHV derart nachführt, dass das Verhältnis zwischen der Zählrate der Impulse am Ausgang des ersten Komparators 60 und der Zählrate der Impulse am Ausgang des zweiten Komparators 61 der vorgegebenen Funktion entspricht, insbesondere konstant bleibt, wenn die Zählrate am Messkanaleingang MK unter einer vorgegebenen Schwelle liegt, und dass er mittels geeigneter Ansteuerung der Hochspannungsquelle 30 die Hochspannung UHV derart nachführt, dass die absolute Zählrate am Regelkanaleingang RK konstant bleibt, wenn die Zählrate über der vorgegebenen Schwelle liegt

Zur Überwachung der ordnungsgemäßen Funktion der Driftkompensation wird diese durch eine Driftkompensationsüberwachungseinheit überwacht, die den Verstärker 81, den dritten Komparator 62 und eine Zählratenüberwachungseinheit in Form des Mikroprozessors 70 umfasst, der eine Zählrate der Impulse am Ausgang des dritten Komparators 62, d.h. an seinem Überwachungskanaleingang UK, zur Überwachung der automatischen Driftkompensation auswertet. Eine Fehlfunktion der automatischen Driftkompensation wird festgestellt, wenn die durch die Überwachungsstrahlungsquelle 41 bewirkte Zählrate, d.h. die Zählrate am Überwachungskanaleingang UK, eine obere Zählratenschwelle überschreitet oder eine untere Zählratenschwelle unterschreitet. Hierzu wird die Zählrate vor der Auswertung über einen Zeitbereich von einigen Minuten bis einigen Stunden gemittelt. Die Zählratenschwellen ergeben sich aus einem theoretisch zu erwartenden Wert, der unter anderem von der verwendeten Überwachungsstrahlenquelle, dem Szintillatormaterial, der Szintillatorgröße etc. abhängt. Die Zählratenschwellen können rechnerisch oder auch empirisch ermittelt werden.

Wenn im Zuge eines Driftkompensationsvorgangs die Verstärkung verändert wird, ändert sich auch die durch die Überwachungsstrahlungsquelle 40 bewirkte Zählrate. Da diese Zählrate vorhersagbar bzw. bekannt ist, kann sie dazu verwendet werden, die ordnungsgemäße Funktion der Driftkompensation zu überwachen. Wenn beispielsweise im Zuge eines Driftkompensationsvorgangs die Verstärkung fehlerhaft auf zu hohe Werte eingestellt wird, ergibt sich am Überwachungskanaleingang UK eine zu hohe Zählrate, die über der oberen vorgegebenen Zählratenschwelle liegt. Der Mikroprozessor kann basierend darauf eine Fehlfunktion feststellen, die Hochspannung UHV durch geeignete Ansteuerung der Hochspannungsquelle 30 auf unkritische Werte reduzieren und ein Alarmsignal AL ausgeben.

Der Mikroprozessor 70 gibt zusätzlich zum Alarmsignal AL noch ein Messsignal MS aus, das in Abhängigkeit von der Zählrate am Messkanaleingang MK den Wert einer Prozessgröße, beispielsweise einen Füllstand eines Behälters, abbildet.

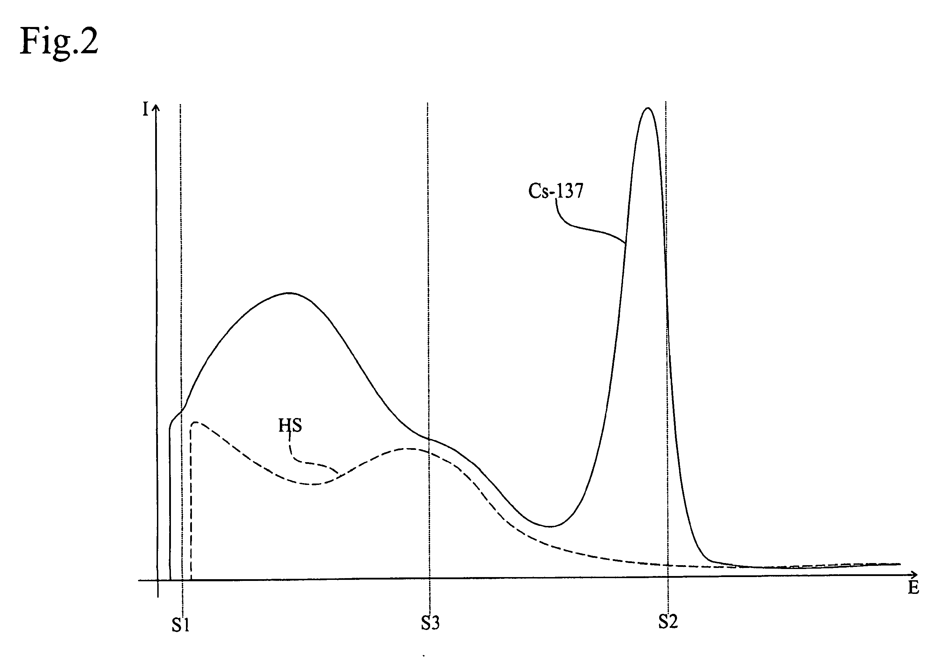

Fig. 2 zeigt ein Energiespektrum Cs-137 der Cs-137-Strahlungsquelle 40 als Nutzstrahlungsquelle und ein Energiespektrum HS der Höhenstrahlung 41 als Überwachungsstrahlungsquelle mit zugehörigen Schwellenwerten S1 bis S3 (siehe auch Fig. 1). Auf der X-Achse ist die Energie E und auf der Y-Achse die Intensität I, d.h. die Zählrate, aufgetragen. Es sei angemerkt, dass aus Gründen der Darstellbarkeit die tatsächlichen Energiewerte auf der X-Achse für die Kurven Cs-137 und HS unterschiedlich sind, da das Verstärkungsverhältnis zwischen Signalen am Ausgang des Verstärkers 80 und Signalen am Ausgang des Verstärkers 81 geeignet gewählt wurde. Das Energiespektrum HS der Höhenstrahlung weist folglich spektrale Anteile auf, die ein wesentlich höheres Energieniveau aufweisen, als die spektrale Anteile der Nutzstrahlung Cs-137, d.h. wäre bei einheitlicher Skalierung der Energie-Achse deutlich nach rechts verschoben.

Wie aus Fig. 2 hervorgeht, ist die Messschwelle S1 derart gewählt, dass im Wesentlichen alle vom Szintillator nachgewiesenen Photonen der Nutzstrahlungsquelle 40 zu einem Impuls am Messkanaleingang MK führen. Die Regelschwelle S2 ist derart gewählt, dass nur Photonen leicht oberhalb des Maximums des so genannten Photopeaks bei 662keV zu einem Impuls am Regelkanaleingang RK führen. Im einfachsten Fall einer Driftkompensation wird die Zählrate dieser Impulse konstant gehalten. Andernfalls wird ein Verhältnis zwischen der Zählrate der Impulse am Regelkanaleingang RK und am Messkanaleingang MK konstant gehalten.

Die Überwachungsschwelle S3 wird abhängig vom Energiespektrum der Überwachungsstrahlungsquelle 41 geeignet gewählt, also energetisch deutlich von den Schwellen S1 und S2 verschieden, d.h. nur Photonen mit einer Energie oberhalb dieser Schwelle S3 führen zu einem Impuls am Überwachungskanaleingang UK. Wenn die Zählrate im Überwachungskanal UK nach geeignet langer Mittelungszeit von der Sollzählrate um ein bestimmtes Maß abweicht, kann auf eine falsche Verstärkung bzw. auf eine falsch eingestellte Hochspannung UHV geschlossen, das Gerät in einen sicheren Zustand überführt und ein Fehler ausgegeben werden.

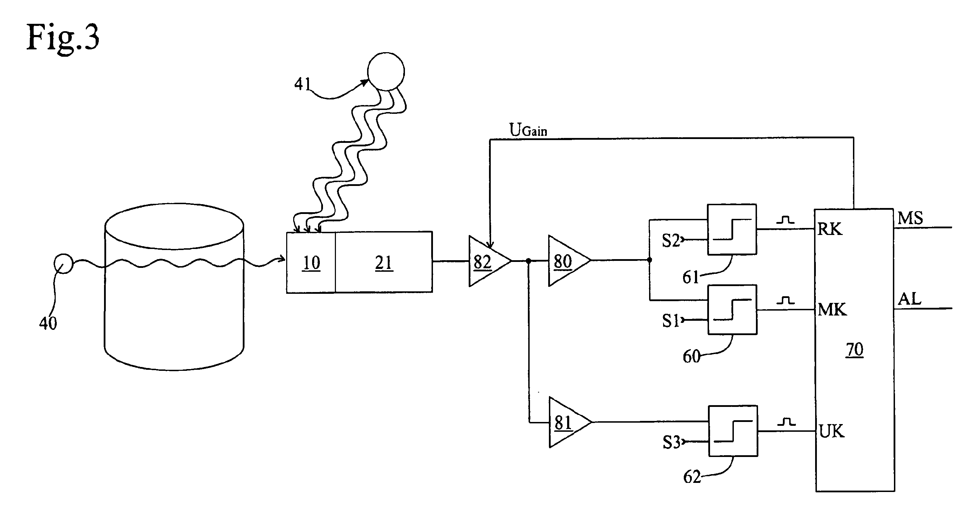

Fig. 2 zeigt eine zweite Ausführungsform einer erfindungsgemäßen Vorrichtung zur Überwachung einer automatischen Driftkompensation eines Szintillationszählers. Bei der in Fig. 3 gezeigten Ausführungsform ist ein optischer Sensor in Form einer Photodiode 21 vorgesehen. Zur Driftkompensation, d.h. zur korrekten Arbeitspunkteinstellung, wird eine Verstärkungseinheit in Form eines Verstärkers 82 mit einstellbarer Verstärkung mit einer Einstellspannung UGain beaufschlagt, die durch den Mikroprozessor 70 in Abhängigkeit von den Zählraten am Regelkanal RK und am Messkanal MK erzeugt wird. Im übrigen sind die in den Figuren 1 und 3 gezeigten Ausführungsformen identisch.

Die gezeigten Ausführungsformen ermöglichen die zuverlässige Überwachung der Funktion der Driftkompensation durch eine Langzeitaufnahme und Mittelung von Höhenstrahlungsimpulsen aus einem unabhängigen Zählkanal UK. Mit anderen Worten wird die immer vorhandene Höhenstrahlung als zweites unabhängiges Funktionskriterium für die korrekte Driftkompensation verwendet.

## Patentansprüche

1. Verfahren zur Überwachung einer automatischen Driftkompensation eines Szintillationszählers mit einem Szintillator (10),
- wobei der Szintillator (10) zur automatischen Driftkompensation mit der Strahlung einer Nutzstrahlungsquelle (40) mit einem Nutzstrahlungsquellenenergiespektrum beaufschlagt wird und
- wobei die automatische Driftkompensation die Schritte umfasst:
- Erzeugen von verstärkten elektrischen Impulsen mit einem Betrag, der von der Energie eines beobachteten Teilchens der Strahlungsquelle und von der Verstärkung abhängt,
- Bestimmen einer ersten Zählrate von Impulsen mit einem Betrag, der über einer ersten Schwelle (S1) liegt,
- Bestimmen einer zweiten Zählrate von Impulsen mit einem Betrag, der über einer zweiten Schwelle (S2) liegt, wobei die zweite Schwelle (S2) über der ersten Schwelle (S1) liegt, und
- Regeln der Verstärkung derart, dass ein Verhältnis zwischen der ersten Zählrate und der zweiten Zählrate einer vorgegebenen Funktion entspricht, insbesondere konstant bleibt,
**dadurch gekennzeichnet, dass**
- der Szintillator (10) mit der Strahlung einer Überwachungsstrahlungsquelle (41) mit einem Überwachungsstrahlungsquellenenergiespektrum beaufschlagt wird, das sich von dem Nutzstrahlungsquellenenergiespektrums unterscheidet, und
- eine durch die Überwachungsstrahlungsquelle (41) bewirkte Zählrate zur Überwachung der automatischen Driftkompensation ausgewertet wird.

2. Verfahren nach Anspruch 1, **dadurch gekennzeichnet, dass** das Überwachungsstrahlungsquellenenergiespektrum spektrale Anteile aufweist, die ein höheres Energieniveau aufweisen, als spektrale Anteile des Nutzstrahlungsquellenenergiespektrums.

3. Verfahren nach Anspruch 1 oder 2, **dadurch gekennzeichnet, dass** die Strahlung der Überwachungsstrahlungsquelle kosmische Höhenstrahlung ist.

4. Verfahren nach Anspruch 1 oder 2, **dadurch gekennzeichnet, dass** die Überwachungsstrahlungsquelle eine Kalium-40-Strahlungsquelle ist.

5. Verfahren nach einem der vorhergehenden Ansprüche, **dadurch gekennzeichnet, dass** eine Fehlfunktion der automatischen Driftkompensation bestimmt wird, wenn die durch die Überwachungsstrahlungsquelle bewirkte Zählrate eine obere Zählratenschwelle überschreitet oder eine untere Zählratenschwelle unterschreitet.

6. Verfahren nach einem der vorhergehenden Ansprüche, **dadurch gekennzeichnet, dass** eine durch die Nutzstrahlungsquelle bewirkte Zählrate zur Messung einer Prozessgröße ausgewertet wird.

7. Vorrichtung zur Überwachung einer automatischen Driftkompensation eines Szintillationszählers zur Durchführung des Verfahrens nach einem der Ansprüche 1 bis 6, umfassend
- einen Szintillator (10),
- einen optischen Sensor (20, 21), der mit dem Szintillator optisch gekoppelt ist, wobei der optische Sensor elektrische Impulse mit einem Betrag erzeugt, der von der Energie eines beobachteten Teilchens einer Strahlungsquelle (40, 41) abhängt,
- eine Verstärkungseinheit (30, 20; 82), die mit dem optischen Sensor elektrisch gekoppelt ist und die dazu ausgebildet ist, die elektrischen Impulse des optischen Sensors mit einem variablen Verstärkungsfaktor zu verstärken,
- einen ersten mit dem optischen Sensor gekoppelten Komparator (60), der an seinem Ausgang einen Impuls erzeugt, wenn der Betrag des durch den optischen Sensor erzeugten und verstärkten Impulses über einer ersten Schwelle (S1) liegt,
- einen zweiten mit dem optischen Sensor gekoppelten Komparator (61), der an seinem Ausgang einen Impuls erzeugt, wenn der Betrag des durch den optischen Sensor erzeugten und verstärkten Impulses über einer zweiten Schwelle (S2) liegt, wobei die zweite Schwelle über der ersten Schwelle liegt, und
- eine Driftkompensationseinheit (70), die mit der Verstärkungseinheit und mit dem jeweiligen Ausgang des ersten und des zweiten Komparators verbunden ist und die dazu ausgebildet ist, den Verstärkungsfaktor derart nachzuführen, dass ein Verhältnis zwischen einer Zählrate der Impulse am Ausgang des ersten Komparators und einer Zählrate der Impulse am Ausgang des zweiten Komparators einer vorgegebenen Funktion entspricht, insbesondere konstant bleibt,
**gekennzeichnet durch**
- eine Driftkompensationsüberwachungseinheit (70, 81, 62), die dazu ausgebildet ist, eine **durch** eine Überwachungsstrahlungsquelle (41) bewirkte Zählrate zur Überwachung der automatischen Driftkompensation auszuwerten, wobei die Driftkompensationsüberwachungseinheit umfasst:
- einen dritten mit dem optischen Sensor gekoppelten Komparator (62), der an seinem Ausgang einen Impuls erzeugt, wenn der Betrag des **durch** den optischen Sensor erzeugten und verstärkten Impulses über einer dritten Schwelle (S3) liegt, wobei die dritte Schwelle sich von der ersten Schwelle und der zweiten Schwelle unterscheidet, und
- eine Zählratenüberwachungseinheit (70), die eine Zählrate der Impulse am Ausgang des dritten Komparators zur Überwachung der automatischen Driftkompensation auswertet.

8. Vorrichtung nach Anspruch 7, **dadurch gekennzeichnet, dass** die dritte Schwelle energetisch über der ersten Schwelle und der zweiten Schwelle liegt.

9. Vorrichtung nach Anspruch 7 oder 8, **dadurch gekennzeichnet, dass** der Szintillator ein Nal(T1)-Kristall ist.

10. Vorrichtung nach einem der Ansprüche 7 bis 9, **gekennzeichnet durch** eine Nutzstrahlungsquelle, insbesondere in Form einer Cs-137- Strahlungsquelle (40).

11. Vorrichtung nach einem der Ansprüche 7 bis 10, **gekennzeichnet durch** eine Überwachungsstrahlungsquelle (41), insbesondere in Form einer Kalium-40-Strahlungsquelle.

12. Vorrichtung nach einem der Ansprüche 7 bis 11, **dadurch gekennzeichnet, dass**
- der optische Sensor einen Photomultiplier (20) umfasst und
- die Verstärkungseinheit eine einstellbare Hochspannungsquelle (30) zur Erzeugung einer einstellbaren Hochspannung (UHV) für den Photomultiplier umfasst,
- wobei der Photomultiplier elektrische Impulse mit einem Betrag erzeugt, der von der Hochspannung abhängt, und
- wobei die Driftkompensationseinheit mit der Hochspannungsquelle verbunden ist und dazu ausgebildet ist, die Hochspannung derart nachzuführen, dass das Verhältnis zwischen der Zählrate der Impulse am Ausgang des ersten Komparators und der Zählrate der Impulse am Ausgang des zweiten Komparators einer vorgegebenen Funktion entspricht, insbesondere konstant bleibt.

13. Vorrichtung nach einem der Ansprüche 7 bis 11, **dadurch gekennzeichnet, dass**
- der optische Sensor eine Photodiode (21) umfasst und
- die Verstärkungseinheit einen Verstärker (82) mit einstellbarer Verstärkung umfasst,
- wobei die Driftkompensationseinheit mit dem Verstärker verbunden ist und dazu ausgebildet ist, die einstellbare Verstärkung derart nachzuführen, dass das Verhältnis zwischen der Zählrate der Impulse am Ausgang des ersten Komparators und der Zählrate der Impulse am Ausgang des zweiten Komparators einer vorgegebenen Funktion entspricht, insbesondere konstant bleibt.

## Claims

1. Method for monitoring an automatic drift compensation of a scintillation counter with a scintillator (10),
- wherein the radiation from a working radiation source (40) with a working radiation source energy spectrum is applied to the scintillator (10) for automatic drift compensation, and
- wherein the automatic drift compensation comprises the steps:
- generating amplified electrical pulses having a level that is dependent on the energy of an observed particle of the radiation source and on the gain, determining a first counting rate of pulses having a level that lies above a first threshold (S1),
- determining a second counting rate of pulses having a level that lies above a second threshold (S2), the second threshold (S2) lying above the first threshold (S1), and
- controlling the gain in such a way that a ratio between the first counting rate and the second counting rate corresponds to a predetermined function, in particular remains constant,
**characterized in that**
- the radiation from a monitoring radiation source (41) with a monitoring radiation source energy spectrum, which differs from the working radiation source energy spectrum, is applied to the scintillator (10), and
- a counting rate caused by the monitoring radiation source (41) is evaluated for the purpose of monitoring the automatic drift compensation.

2. Method according to Claim 1, **characterized in that** the monitoring radiation source energy spectrum has spectral components which have a higher energy level than spectral components of the working radiation source energy spectrum.

3. Method according to Claim 1 or 2, **characterized in that** the radiation from the monitoring radiation source is cosmic radiation.

4. Method according to Claim 1 or 2, **characterized in that** the monitoring radiation source is a potassium-40 radiation source.

5. Method according to any of the preceding claims, **characterized in that** a malfunction of the automatic drift compensation is determined if the counting rate caused by the monitoring radiation source exceeds an upper counting rate threshold or falls below a lower counting rate threshold.

6. Method according to any of the preceding claims, **characterized in that** a counting rate caused by the working radiation source is evaluated for the purpose of measuring a process variable.

7. Device for monitoring an automatic drift compensation of a scintillation counter for carrying out the method according to any of Claims 1 to 6, comprising
- a scintillator (10),
- an optical sensor (20, 21), which is optically coupled to the scintillator, wherein the optical sensor generates electrical pulses having a level that is dependent on the energy of an observed particle of a radiation source (40, 41),
- an amplifying unit (30, 20, 82), which is electrically coupled to the optical sensor and which is designed to amplify the electrical pulses of the optical sensor with a variable gain factor,
- a first comparator (60) coupled to the optical sensor, which first comparator generates a pulse at its output if the level of the pulse generated by the optical sensor and amplified lies above a first threshold (S1),
- a second comparator (61) coupled to the optical sensor, which second comparator generates a pulse at its output if the level of the pulse generated by the optical sensor and amplified lies above a second threshold (S2), the second threshold lying above the first threshold, and
- a drift compensation unit (70), which is connected to the amplifying unit and to the respective output of the first and of the second comparators and which is designed to adjust the gain factor in tracking fashion in such a way that a ratio between a counting rate of the pulses at the output of the first comparator and a counting rate of the pulses at the output of the second comparator corresponds to a predetermined function, in particular remains constant, **characterized in that**
- a drift compensation monitoring unit (70, 81, 62) which is designed to evaluate a counting rate caused by a monitoring radiation source (41) for the purpose of monitoring the automatic drift compensation, wherein the drift compensation monitoring unit comprises:
- a third comparator (62) coupled to the optical sensor, which third comparator generates a pulse at its output if the level of the pulse generated by the optical sensor and amplified lies above a third threshold (S3), the third threshold differing from the first threshold and the second threshold, and
- a counting rate monitoring unit (70), which evaluates a counting rate of the pulses at the output of the third comparator for the purpose of monitoring the automatic drift compensation.

8. Device according to Claim 7, **characterized in that** the third threshold lies energetically above the first threshold and the second threshold.

9. Device according to Claim 7 or 8, **characterized in that** the scintillator is an Nal(TI) crystal.

10. Device according to any of Claims 7 to 9, **characterized by** a working radiation source, in particular in the form of a Cs-137 radiation source (40).

11. Device according to any of Claims 7 to 10, **characterized by** a monitoring radiation source (41), in particular in the form of a potassium-40 radiation source.

12. Device according to any of Claims 7 to 11, **characterized in that**
- the optical sensor comprises a photomultiplier (20), and
- the amplifying unit comprises an adjustable high-voltage source (30) for generating an adjustable high voltage (UHV) for the photomultiplier,
- wherein the photomultiplier generates electrical pulses having a level that is dependent on the high voltage, and
- wherein the drift compensation unit is connected to the high-voltage source and is designed to adjust the high voltage in tracking fashion in such a way that the ratio between the counting rate of the pulses at the output of the first comparator and the counting rate of the pulses at the output of the second comparator corresponds to a predetermined function, in particular remains constant.

13. Device according to any of Claims 7 to 11, **characterized in that**
- the optical sensor comprises a photodiode (21), and
- the amplifying unit comprises an amplifier (82) having an adjustable gain,
- wherein the drift compensation unit is connected to the amplifier and is designed to adjust the adjustable gain in tracking fashion in such a way that the ratio between the counting rate of the pulses at the output of the first comparator and the counting rate of the pulses at the output of the second comparator corresponds to a predetermined function, in particular remains constant.

## Revendications

1. Procédé destiné à la surveillance d'une compensation automatique de la dérive d'un compteur à scintillation avec un scintillateur (10),
- dans lequel le scintillateur (10) est soumis au rayonnement d'une source de rayonnement utile (40) avec un spectre d'énergie d'une source de rayonnement utile pour la compensation automatique de la dérive et
- dans lequel la compensation automatique de la dérive comprend les étapes suivantes :
- génération d'impulsions électriques amplifiées avec une amplitude dépendant de l'énergie d'une particule observée de la source de rayonnement et de l'amplification,
- détermination d'un premier taux de comptage d'impulsions dont l'amplitude se situe au-dessus d'un premier seuil (S1),
- détermination d'un deuxième taux de comptage d'impulsions dont l'amplitude se situe au-dessus d'un deuxième seuil (S2), le deuxième seuil (S2) se situant au-dessus du premier seuil (S1), et
- réglage de l'amplification de telle sorte qu'un rapport entre le premier taux de comptage et le deuxième taux de comptage correspond à une fonction prédéfinie, notamment qu'il reste constant,
**caractérisé en ce que**
- le scintillateur (10) est soumis au rayonnement d'une source de rayonnement de surveillance (41) avec un spectre d'énergie de la source de rayonnement de surveillance distinct du spectre d'énergie de la source de rayonnement utile, et
- un taux de comptage provoqué par la source de rayonnement de surveillance (41) est analysé pour la surveillance de la compensation automatique de la dérive.

2. Procédé selon la revendication 1, **caractérisé en ce que** le spectre d'énergie de la source de rayonnement de surveillance comporte des composantes spectrales présentant un niveau d'énergie supérieur à celui des composantes spectrales du spectre d'énergie de la source de rayonnement utile.

3. Procédé selon la revendication 1 ou 2, **caractérisé en ce que** le rayonnement de la source de rayonnement de surveillance est le rayonnement cosmique.

4. Procédé selon la revendication 1 ou 2, **caractérisé en ce que** la source de rayonnement de surveillance est une source de rayonnement de potassium 40.

5. Procédé selon une des revendications précédentes, **caractérisé en ce qu'**on définit un dysfonctionnement de la compensation automatique de la dérive lorsque le taux de comptage provoqué par la source de rayonnement de surveillance dépasse un seuil supérieur de taux de comptage ou passe sous un seuil inférieur de taux de comptage.

6. Procédé selon une des revendications précédentes, **caractérisé en ce qu'**un taux de comptage provoqué par la source de rayonnement utile est analysé pour la mesure d'une grandeur du processus.

7. Dispositif destiné à la surveillance d'une compensation automatique de la dérive d'un compteur à scintillation pour l'exécution du procédé selon une des revendications 1 à 6, comprenant
- un scintillateur (10),
- un capteur optique (20, 21) couplé optiquement au scintillateur, le capteur optique générant des impulsions électriques avec un amplitude dépendant de l'énergie d'une particule observée d'une source de rayonnement (40, 41),
- une unité d'amplification (30, 20 ; 82) couplée électriquement au capteur optique et développée pour amplifier les impulsions électriques du capteur optique avec un facteur d'amplification variable,
- un premier comparateur (60) couplé au capteur optique, qui génère une impulsion à sa sortie lorsque l'amplitude de l'impulsion générée et amplifiée par le capteur optique se situe au-dessus d'un premier seuil (S1),
- un deuxième comparateur (61) couplé au capteur optique, qui génère une impulsion à sa sortie lorsque l'amplitude de l'impulsion générée et amplifiée par le capteur optique se situe au-dessus d'un deuxième seuil (S2), le deuxième seuil se situant au-dessus du premier seuil, et
- une unité de compensation de la dérive (70) reliée à l'unité d'amplification et à la sortie respective du premier et du deuxième comparateur, et qui est développée pour suivre le facteur d'amplification de telle sorte qu'un rapport entre un taux de comptage des impulsions en sortie du premier comparateur et un taux de comptage des impulsions en sortie du deuxième comparateur corresponde à une fonction prédéfinie, notamment qu'il reste constant,
**caractérisé en ce que**
- une unité de surveillance de la compensation de la dérive (70, 81, 62) est développée pour analyser un taux de comptage provoqué par une source de rayonnement de surveillance (41) pour la surveillance de la compensation automatique de la dérive, l'unité de surveillance de la compensation de la dérive comprenant :
- un troisième comparateur (62) couplé au capteur optique, qui génère une impulsion à sa sortie lorsque l'amplitude de l'impulsion générée et amplifiée par le capteur optique se situe au-dessus d'un troisième seuil (S3), le troisième seuil étant distinct du premier seuil et du deuxième seuil, et
- une unité de surveillance du taux de comptage (70) qui analyse un taux de comptage des impulsions en sortie du troisième comparateur pour la surveillance de la compensation automatique de la dérive.

8. Dispositif selon la revendication 7, **caractérisé en ce que** le troisième seuil se situe à un niveau d'énergie supérieur à celui du premier seuil et du deuxième seuil.

9. Dispositif selon la revendication 7 ou 8, **caractérisé en ce que** le scintillateur est un cristal de NaI(T1).

10. Dispositif selon une des revendications 7 à 9, **caractérisé par** une source de rayonnement utile, notamment sous la forme d'une source de rayonnement de Cs137 (40).

11. Dispositif selon une des revendications 7 à 10, **caractérisé par** une source de rayonnement de surveillance (41), notamment sous la forme d'une source de rayonnement de potassium 40.

12. Dispositif selon une des revendications 7 à 11, **caractérisé en ce que**
- le capteur optique comprend un photomultiplicateur (20) et
- l'unité d'amplification comprend une source de haute tension réglable (30) pour fournir au photomultiplicateur une haute tension réglable (UHV),
- le photomultiplicateur générant des impulsions électriques avec une amplitude dépendant de la haute tension, et
- l'unité de compensation de la dérive étant reliée à la source de haute tension et étant développée pour suivre la haute tension de telle sorte que le rapport entre le taux de comptage des impulsions en sortie du premier comparateur et le taux de comptage des impulsions en sortie du deuxième comparateur corresponde à une fonction prédéfinie, notamment qu'il reste constant.

13. Dispositif selon une des revendications 7 à 11, **caractérisé en ce que**
- le capteur optique comprend une photodiode (21) et
- l'unité d'amplification comprend un amplificateur (82) dont l'amplification est réglable,
- l'unité de compensation de la dérive étant reliée à l'amplificateur et développée de manière à suivre l'amplification réglable de telle sorte que le rapport entre le taux de comptage des impulsions en sortie du premier comparateur et le taux de comptage des impulsions en sortie du deuxième comparateur corresponde à une fonction prédéfinie, notamment qu'il reste constant.
